# EUROPÄISCHE PATENTSCHRIFT

(11) **EP 0 981 041 B1**
(45) Veröffentlichungstag und Bekanntmachung des Hinweises auf die Patenterteilung: **29.12.2004**
(21) Anmeldenummer: 99202664.1
(22) Anmeldetag: 17.08.1999
(51) Int. Cl.: G01G 23/00

(54) **Überlastschutz für eine Kraftmessvorrichtung, insbesondere eine Waage**
Overload protection for a force measuring device, in particular a balance
Système de protection de surcharge pour un capteur de force, en particulier une balance

(30) Priorität: 20.08.1998 DE 19837875
(43) Veröffentlichungstag der Anmeldung: 23.02.2000
(73) Patentinhaber: Mettler-Toledo GmbH, 8606 Greifensee (CH)
(72) Erfinder: Burkhard, Hans-Rudolf, 8492 Wila (CH); Schneider, Ferdinand, 8400 Winterthur (CH)

(56) Entgegenhaltungen:
- DE-U- 29 514 793
- DE-U- 29 708 886

## Beschreibung

Die Erfindung bezieht sich auf einen Überlastschutz für eine Kraftmeßvorrichtung, insbesondere eine Waage, mit einem Lastaufnehmer, der einen zur Einleitung der zu messenden Kraft in die Kraftmeßvorrichtung dienenden ersten Teil, einen damit durch zwei parallele, sich mit ihrer Längsrichtung quer zur Richtung der Krafteinleitung erstreckende, längssteife sowie quer zu ihrer Längsrichtung auslenkbare Lenker parallelogrammartig verbundenen, zur Weiterleitung der zu messenden Kraft an einen Meßwandler dienenden zweiten Teil, je einen an dem ersten und dem zweiten Teil ausgebildeten ersten bzw. zweiten Eingriffsbereich, durch die der erste und der zweite Teil in einen ihre gegenseitige Auslenkung in der Richtung
der Krafteinleitung sperrenden Eingriff bringbar sind, und ein die beiden Teile entgegen der in den ersten Teil einleitbaren, zu messenden Kraft in ihren Eingriff spannendes, vorgespanntes elastisches Element aufweist.

Derartige Überlastschutze sollen insbesondere bei empfindlichen Waagen den Meßwandler und zur Weiterleitung der zu messenden Kraft an den Meßwandler dienende Teile gegenüber Überbeanspruchung durch Kräfte schützen, welche die bei der vorgesehenen Nennkraft der Waage auftretenden Kräfte erheblich überschreiten. Solche schädlichen Krafteinwirkungen treten beispielsweise auf, wenn bei einer Waage durch fehlerhaftes Bedienen die zu wiegende Last zu hart auf die Waagschale aufgesetzt wird. Dann wirkt auf den Lastaufnehmer eine die Nenngewichtskraft erheblich übersteigende Kraft ein. Selbst wenn für den Lastaufnehmer ein seinen Bewegungsweg in der Richtung der Krafteinleitung begrenzender, stationärer Anschlag vorgesehen ist, erfährt dabei der Lastaufnehmer bis zu seinem Stillstand am Anschlag eine übermäßig hohe Beschleunigung, was sowohl an dem Meßwandler als auch den zur Weiterleitung der zu messenden Kraft dienenden Teilen entsprechend hohe Beschleunigungskräfte und/oder kurzzeitige hohe Zug- oder Druckspannungen an Lagern und Koppeln hervorruft, für die die auf eine bestimmte Nennlast ausgelegte Waage nicht eingerichtet ist.

Bei einem an einer Waage vorgesehenen bekannten Überlastschutz der eingangs genannten Art (DE 28 30 345 C3) sind die beiden Lenker des Überlastschutzes dreieck- oder trapezförmig aus einem Flachmaterial gebildet sowie mit der breiteren Basis der Dreiecks- bzw. Trapezform an dem zweiten Teil und der der breiteren Basis gegenüberliegenden Spitze der Dreiecksform bzw. schmäleren Seite der Trapezform an dem ersten Teil mittels Spannschrauben eingespannt. Hierfür weist das zweite Teil eine der Einspannung der Lenker dienende Konsole auf, die sich an der dem ersten Teil abgewandten Seite des zweiten Teils in einem Abstand zum zweiten Teil quer zu den beiden Lenkern erstreckt. Der diese Konsole abstützende Hauptteil des zweiten Teils erstreckt sich durch die materialfreie Innenfläche der Dreiecks- bzw. Trapezform hindurch, die von den die Lenker bildenden Bereichen des Flachmaterials begrenzt wird, welche längs der sich zwischen den beiden Teilen erstreckenden Seiten der Dreiecks- bzw. Trapezform verlaufen. Diese Geometrie des Überlastschutzes erfordert einen verhältnismäßig hohen Platzbedarf. Darüber hinaus verursacht der Zusammenbau des ersten und zweiten Teils und der Lenker mittels der Spannschrauben einen verhältnismäßig großen Montageaufwand.

Es ist zwar bekannt (DE 41 19 734 A1), bei einer Kraftmeßvorrichtung deren zur Einleitung und Übertragung der zu messenden Kraft auf den Meßwandler dienenden Teile in einstückiger Bauweise besonders raumsparend auszubilden. Dies schließt jedoch keinen Überlastschutz für den Lastaufnehmer ein.

Der Erfindung liegt die Aufgabe zugrunde, einen Überlastschutz der eingangs genannten Art zu schaffen, dessen Aufbau besonders platzsparend ist und einen geringen Montageaufwand erfordert.

Erfindungsgemäß wird diese Aufgabe dadurch gelöst, daß die beiden Teile und die beiden Lenker durch einstückig zusammenhängende Materialbereiche eines Materialblocks gebildet sind, in dem sie von einem den Materialblock durchsetzenden materialfreien Bereich voneinander abgegrenzt sind.

Wegen des einstückigen Zusammenhangs der beiden Teile des Lastaufnehmers mittels der Lenker reduziert sich bei dem erfindungsgemäßen Überlastschutz der Montageaufwand auf das Einfügen des vorgespannten elastischen Elements, das die beiden Teile miteinander in Eingriff spannt. Auch läßt sich das Volumen, das der die beiden Teile und die Lenker voneinander abgrenzende materialfreie Bereich innerhalb des Materialblocks einnimmt, klein halten, wodurch der Platzbedarf für den Überlastschutz gering ist. Für die Ausbildung des materialfreien Bereichs stehen rationelle Bearbeitungsverfahren zur Verfügung, beispielsweise Fräsen, Bohren oder Funkenerodieren sowie Kombinationen dieser Bearbeitungsverfahren. Vor allem das letztgenannte Funkenerodieren erweist sich als besonders geeignet.

Solange das vorgespannte elastische Element die beiden Teile miteinander in Eingriff hält, sind das erste und das zweite Teil starr miteinander gekoppelt und wird die auf das erste Teil eingeleitete Kraft von dem zweiten Teil in Richtung auf den Meßwandler weitergeleitet. Übersteigt jedoch die in das erste Teil eingeleitete Kraft den der Vorspannung des elastischen Elementes entsprechenden Eingriff, so wird das erste Teil gegenüber dem zweiten Teil ausgelenkt und beschleunigt, bis es an einem stationären Anschlag zum Stillstand kommt. Die die Vorspannung überschreitenden Beschleunigungskräfte des ersten Teils übertragen sich jedoch nicht auf das zweite Teil, wodurch die schädlichen Beschleunigungskräfte von dem Meßwandler und sonstigen, der Kraftübertragung dienenden Teilen der Kraftmeßvorrichtung ferngehalten werden. Die Vorspannung des elastischen Elementes wird dabei derart gewählt, daß sie den Eingriff der beiden Teile bis zur Nennlast der Kraftmeßvorrichtung aufrechterhält.

In einer weiteren Ausgestaltung der Erfindung ist zweckmäßig vorgesehen, daß der erste und der zweite Eingriffsbereich jeweils durch eine an dem den ersten und den zweiten Teil bildenden Materialbereich zu dem jeweils anderen Materialbereich hin vorspringende Schulter gebildet ist, von denen die Schulter des den ersten Teil bildenden Materialbereichs eine in die der Richtung der Krafteinleitung entgegengesetzte Richtung weisende freie Oberfläche und die Schulter des den zweiten Teil bildenden Materialbereichs eine in die Richtung der Krafteinleitung weisende freie Oberfläche aufweist und die den ersten und den zweiten Teil bildenden Materialbereiche von dem vorgespannten elastischen Element mit diesen freien Oberflächen gegeneinandergespannt sind. Da einerseits die freie Oberfläche der Schulter des zweiten Teils in die Richtung der Krafteinleitung weist, also die Flächennormale dieser freien Oberfläche in die Richtung der Krafteinleitung zeigt, und andererseits die freie Oberfläche der Schulter des ersten Teils in die der Richtung der Krafteinleitung entgegengesetzte Richtung weist, also mit ihrer Flächennormalen gegen die Richtung der Krafteinleitung gerichtet ist, hat die auf das erste Teil einwirkende Kraft die Tendenz, die freie Oberfläche der Schulter des ersten Teils von der freien Oberfläche der Schulter des zweiten Teils abzuheben, wodurch das erste Teil gegenüber dem zweiten Teil in der Richtung der Krafteinleitung ausgelenkt wird. Diese Auslenkung erfolgt jedoch erst dann, wenn die eingeleitete Kraft die Vorspannung des elastischen Elements überwindet, das die beiden freien Oberflächen entgegen der eingeleiteten Kraft miteinander in Eingriff spannt.

Vorzugsweise ist vorgesehen, daß an mindestens einem der beiden Teile seine den Eingriffsbereich bildende Schulter relativ zu dem Teil quer zur Richtung der Krafteinleitung auslenkbar ausgebildet ist.

Bekanntlich ruft die. auf den Lastaufnehmer einwirkende, zu messende Kraft an dem Lastaufnehmer auch ein Drehmoment hervor, das zu einer wenn auch noch so kleinen Verformung des Lastaufnehmers führt. Diese als Längseckenlasterscheinung bekannte Schwierigkeit wirkt sich beispielsweise um so stärker aus, je weiter ein auf eine von dem Lastaufnehmer abgestützte Waagschale aufgelegtes Gewicht von der Mitte der Waagschale entfernt ist. Die durch die Längseckenlasterscheinung hervorgerufene Verformung kann dazu führen, daß die miteinander in Eingriff stehenden Schultern des ersten und zweiten Teils des Lastaufnehmers geringfügig gegeneinander verrutschen. Dies führt zu einem Hysteresefehler. Durch die quer zur Richtung der Krafteinleitung auslenkbare Ausbildung der Schulter an mindestens einem der beiden Teile des Lastaufnehmers kann diese Schulter der durch die Eckenlast hervorgerufenen Verformung folgen, wodurch ein gegenseitiges Verrutschen der in Eingriff stehenden Schultern und der damit verbundene Hysteresefehler vermieden wird. Zur Erreichung dieses Zwecks genügt es, daß eine der beiden Schultern des ersten oder des zweiten Teils querauslenkbar ist. Doch könnten auch beide Schultern quer zur Richtung der Krafteinleitung auslenkbar ausgebildet sein.

In einer vorteilhaften Weiterbildung ist vorgesehen, daß die auslenkbare Schulter an einem durch eine von materialfreien Bereichen begrenzte, quer zur Richtung der Krafteinleitung biegeelastische Dünnstelle mit dem die auslenkbare Schulter aufweisenden Teil zusammenhängenden Materialbereich dieses Teils ausgebildet ist. Diese Ausgestaltung ermöglicht es, die auslenkbare Schulter platzsparend und ohne zusätzlichen Montageaufwand an dem betreffenden Teil auszubilden.

Ferner erweist es sich als zweckmäßig, daß das vorgespannte elastische Element eine vorgespannte Druckfeder ist. Die notwendige Vorspannung der Druckfeder ist durch deren Kompression herbeizuführen, wodurch ihr Platzbedarf verringert wird.

Eine vorteilhafte Ausführungsform ist in diesem Zusammenhang derart gestaltet, daß die Druckfeder eine Schraubenfeder ist, deren eines Ende an einer in die der Richtung der Krafteinleitung entgegengesetzte Richtung weisenden Widerlagerfläche des den zweiten Teil bildenden Materialbereichs und deren anderes Ende an einer in die Richtung der Krafteinleitung weisenden Widerlagerschulter eines den den zweiten Teil bildenden Materialbereich in der Richtung der Krafteinleitung und die Schraubenfeder axial mit Spiel durchsetzenden Bolzens abgestützt ist, der mit dem ersten Teil fest verbunden und relativ zu dem zweiten Teil entgegen der Vorspannung der Druckfeder axial verschiebbar ist. Bei dieser Ausführungsform erstreckt sich also der mit dem ersten Teil fest verbundene und relativ zu dem den zweiten Teil bildenden Materialbereich bewegliche Bolzen parallel zur Richtung der Krafteinleitung und mit Spiel innerhalb der Schraubenfeder, wobei durch das Spiel sichergestellt ist, daß der Bolzen die gegenseitige Beweglichkeit des ersten und des zweiten Teils nicht behindert. An dem den zweiten Teil bildenden Materialbereich ist die der Abstützung des einen Endes der Schraubenfeder dienende Widerlagerfläche ausgebildet, die in die der Richtung der Krafteinleitung entgegengesetzte Richtung weist und dadurch das darauf anliegende Ende der Druckfeder entgegen der eingeleiteten Kraft abstützt. Von dieser Widerlagerfläche aus erstreckt sich die Druckfeder mit Spiel auf dem Bolzen bis zu dessen Widerlagerschulter, die in die Richtung der Krafteinleitung weist, also der Widerlagerfläche des den zweiten Teil bildenden Materialbereichs gegenübersteht. Wenn auf den ersten Teil eine Kraft eingeleitet wird, welche die durch die Vorspannung der Druckfeder eingestellte Nennlast überschreitet, wird die Druckfeder unter Annäherung der Widerlagerschulter des Bolzens an die Widerlagerfläche des zweiten Teils weiter zusammengedrückt und dadurch der erste Teil gegenüber dem zweiten Teil in der Richtung der Krafteinleitung ausgelenkt.

In diesem Zusammenhang ist in einer weiteren Ausgestaltung vorgesehen, daß die Schraubenfeder in einer in deren radialer Richtung geschlossenen Ausnehmung des den zweiten Teil bildenden Materialbereichs aufgenommen ist. Diese Ausnehmung läßt sich auf einfache Weise in der Form einer Bohrung ausbilden, die den den zweiten Teil bildenden Materialbereich und den dazu in der zur Richtung der Krafteinleitung entgegengesetzten Richtung benachbarten Lenker parallel zur Richtung der Krafteinleitung teilweise durchsetzt, wobei das Ende der die Ausnehmung bildenden Bohrung gleichzeitig die Widerlagerfläche für die Schraubenfeder bildet.

Eine zweckmäßige Weiterbildung besteht darin, daß die Ausnehmung des den zweiten Teil bildenden Materialbereichs einen die Axialverschiebung des Bolzens begrenzenden Anschlag aufweist. Dieser Anschlag, der beispielsweise durch das stirnseitige Ende der als Blindbohrung ausgebildeten Ausnehmung gebildet sein kann und an dem der davon axial beabstandete, in die Richtung der Krafteinleitung weisende Endbereich des Bolzens bewegungsbegrenzend in Anlage gelangt, begrenzt den möglichen Hub des Bolzens in Abwesenheit anderer Begrenzungen, wie sie beispielsweise nach dem Zusammenbau der Kraftmeßvorrichtung durch die begrenzende Anlage eines mit dem Lastaufnehmer verbundenen Waagschalenträgers an einem gehäusefesten Anschlag zur Verfügung stehen.

Alternativ ist in einer weiteren zweckmäßigen Ausgestaltung vorgesehen, daß der Bolzen mit seinem in die Richtung der Krafteinleitung weisenden Endbereich aus dem Materialblock herausragt. Dieser herausragende Endbereich kann nach der Montage mit einem gehäusefesten Anschlag hubbegrenzend zusammenwirken.

Auch ist es in diesem Zusammenhang zweckmäßig, daß der Bolzen an seinem in die der Richtung der Krafteinleitung entgegengesetzte Richtung weisenden Ende einen Anschlußbereich für die zu messende Kraft aufweist. Hierbei dient also der die Schraubenfeder führende Bolzen gleichzeitig dazu, die in den ersten Teil einzuleitende Kraft aufzunehmen. Im Falle einer Waage ist der Anschlußbereich des Bolzens vorzugsweise als konischer Aufnahmezapfen ausgebildet, auf den die Waagschale aufgesetzt wird.

Die vorstehenden Ausführungsformen können vorteilhaft derart gestaltet sein, daß der Bolzen in dem sich zwischen den beiden Lenkern erstreckenden Bereich des Lastaufnehmers angeordnet ist. Dies ist für einen möglichst geringen Platzbedarf vorteilhaft, weil der durch die beiden Lenker bedingte Raumbedarf gleichzeitig zur Unterbringung des Bolzens genutzt wird.

Vorzugsweise ist auch vorgesehen, daß der materialfreie Bereich zumindest teilweise nur durch eine den Materialblock durchtrennende dünne Schnittlinie gebildet ist. Die Schnittstärke der dünnen Schnittlinie kann auf ein Mindestmaß herabgesetzt werden, das noch eine bei Überlast ausreichende Ausweichbewegung des ersten Teils in bezug auf das zweite Teil des Lastaufnehmers zuläßt. Derartige dünne Schnittlinien von praktisch beliebiger Form lassen sich vor allem durch Funkenerodieren herstellen. Die damit herstellbaren Schnittstärken betragen beispielsweise nur wenige Zehntel Millimeter. Als Werkstoffe für den Materialblock kommen beispielsweise Aluminiumlegierungen in Betracht, doch sind zahlreiche andere Werkstoffe denkbar, beispielsweise auch Stahllegierungen oder Verbundwerkstoffe.

Vorteilhafte Ausführungsformen der Erfindung zeichnen sich auch dadurch aus, daß die beiden Lenker an ihren einander zugewandten Seiten von Abschnitten der dünnen Schnittlinie begrenzt sind, die jeweils zwischen sich und den ihnen jeweils gegenüberliegenden, einander abgewandten Seiten der Lenker in deren Endbereichen je eine biegsame Dünnstelle begrenzen. Hierbei dienen die biegsamen Dünnstellen als Gelenkstellen der Lenker, wodurch eine Parallelogrammführung für den ersten Teil des Lastaufnehmers entsteht, deren Parallelogrammeckpunkte durch die Dünnstellen bestimmt sind.

Eine zweckmäßige weitere Ausgestaltung dieser Ausführungsformen besteht darin, daß die dünne Schnittlinie einen sich von dem dem zweiten Teil abgewandten Ende der Schulter des ersten Teils aus zu dem dem ersten Teil zugewandten Endbereich des Abschnittes, der den der Schulter des ersten Teils gegenüberliegenden Lenker begrenzt, erstreckenden Abschnitt und einen sich von dem dem zweiten Teil zugewandten Ende der Schulter des ersten Teils aus zu dem dem ersten Teil zugewandten Endbereich des Abschnittes, der den der Schulter des zweiten Teils gegenüberliegenden Lenker begrenzt, erstreckenden Abschnitt aufweist. Hierdurch bestimmen die sich von den Schultern aus zu den Lenkern hin erstreckenden Abschnitte der dünnen Schnittlinie zusammen mit den sich quer zur Richtung der Krafteinleitung erstreckenden Schultern die Form der einander zugewandten Ränder des ersten und zweiten Teils komplementär zueinander insbesondere derart, daß der den zweiten Teil bildende Materialbereich sich zwischen den beiden Lenkern zu dem den ersten Teil bildenden Materialbereich hin erstreckt. Die sich quer zur Richtung der Krafteinleitung erstreckenden Schultern liegen dabei in etwa in dem sich zwischen den beiden dem ersten Teil zugewandten Dünnstellen der Lenker erstreckenden Bereich des Lastaufnehmers. Das die beiden Schultern zusammenspannende elastische Element ist beispielsweise neben den Schultern auf deren dem ersten Teil abgewandten Seite des Lastaufnehmers angeordnet.

Dabei ist in einer besonderen Ausgestaltung vorgesehen, daß die die Lenker begrenzenden Abschnitte der Schnittlinie zumindest teilweise eine größere Breite aufweisen als der die die Lenker begrenzenden Abschnitte verbindende Abschnitt. Diese Verbreiterungen sind derart angeordnet, daß sie eine Vergrößerung.des Auslenkweges des ersten Teils in bezug auf das zweite Teil ermöglichen.

Im Rahmen der Erfindung ist auch vorgesehen, daß der den zweiten Teil bildende Materialbereich durch zwei sich mit ihrer Längsrichtung quer zur Richtung der Krafteinleitung erstreckende, längssteife und quer zur Längsrichtung biegsame Parallelogrammlenker, deren jeder an einem Ende mit dem den zweiten Teil bildenden Materialbereich und an seinem dazu entgegengesetzten anderen Ende mit einem feststehenden Teil der Kraftmeßvorrichtung verbunden ist, an dem feststehenden Teil parallel auslenkbar geführt und mit einer von dem feststehenden Teil abgestützten, zur Übertragung der zu messenden Kraft auf den Meßwandler dienenden Einrichtung gekoppelt ist. Solange die Nennlast nicht überschritten wird, bleiben der erste und zweite Teil des Lastaufnehmers fest miteinander gekoppelt, so daß letzterer durch die Parallelogrammlenker in der Richtung der Krafteinleitung längsverschieblich geführt ist. Diese durch eine zu messende Kraft oder Last hervorgerufene Längsverschiebung, die virtuell klein sein kann, wirkt auf die zur Übertragung der zu messenden Kraft dienende Einrichtung ein und erlaubt die Übertragung der zu messenden Kraft auf den Meßwandler. Wegen der bei Überschreitung der Nennlast auftretenden Entkopplung zwischen dem ersten und dem zweiten Teil bleibt diese Kraftübertragungseinrichtung, ebenso wie der Meßwandler, von unzulässig hohen Beschleunigungskräften verschont.

Eine in dieser Hinsicht weitergebildete Ausführungsform, die besonders vorteilhaft ist, zeichnet sich dadurch aus, daß die Parallelogrammlenker und das feststehende Teil als mit dem zweiten Teil einstückig zusammenhängende Materialbereiche des Materialblocks, die von einem den Materialblock durchsetzenden materialfreien Bereich voneinander abgegrenzt sind, ausgebildet sind. Damit werden die Vorteile einer einstückigen Ausbildung nicht nur hinsichtlich des Überlastschutzes im Lastaufnehmer, sondern auch hinsichtlich der für den Meßvorgang erforderlichen Führung des Lastaufnehmers nutzbar gemacht.

Bevorzugt ist diese Ausführungsform derart ausgebildet, daß die Parallelogrammlenker an ihren Längsenden von materialfreien Bereichen begrenzte Biegestellen aufweisen. Insbesondere ist dabei zweckmäßigerweise vorgesehen, daß mindestens einer der eine Biegestelle begrenzenden materialfreien Bereiche durch eine in einen sich in der Längsrichtung der Parallelogrammlenker erstreckenden Außenrand des Materialblocks frei ausmündende dünne Schnittlinie gebildet ist, die einen sich ausgehend von ihrer Ausmündung tangential an die Längsrichtung der Parallelogrammlenker anschmiegenden, gekrümmten Verlauf aufweist.

Diese Ausführungsform erfährt ihre weitere Ausgestaltung dadurch, daß die zur Übertragung der zu messenden Kraft dienende Einrichtung mindestens einen Hebel aufweist, dessen einer Hebelarm durch ein sich mit seiner Längsrichtung in der Richtung der Krafteinleitung erstreckendes, längssteifes und quer zu seiner Längsrichtung biegeelastisches Koppelglied an den den zweiten Teil bildenden Materialbereich angekoppelt ist. Durch den mindestens einen Hebel kann die in den Lastaufnehmer eingeleitete zu messende Kraft auf einen für den Meßwandler geeigneten Wert untersetzt oder übersetzt werden.

Auch hier können die Vorteile der Einstückigkeit dadurch verwirklicht werden, daß das Koppelglied und der Hebel von durch materialfreie Bereiche abgegrenzten, zusammenhängenden Materialbereichen eines zwischen die beiden Parallelogrammlenker ragenden Bereichs des feststehenden Teils gebildet sind. Dabei ist es im Hinblick auf eine Verminderung des Platzbedarfs oder auf eine Erhöhung der Festigkeit der von der zu messenden Kraft belasteten Teile der Kraftmeßvorrichtung wieder von Vorteil, daß die das Koppelglied und den Hebel begrenzenden materialfreien Bereiche zumindest teilweise nur durch den Materialblock durchtrennende dünne Schnittlinien gebildet sind.

Schließlich sind alle erfindungsgemäßen Ausführungsformen insbesondere derart ausgebildet, daß der Materialblock im wesentlichen die Form eines Quaders aufweist, dessen größte Quaderseitenflächen sich parallel zur Längsrichtung der Lenker erstrecken. Hierbei durchsetzen also die materialfreien Bereiche den Materialblock von der einen der beiden größten Quaderseitenflächen zu der dazu parallelen anderen größten Quaderseitenfläche in einer zu den Materialblock im übrigen begrenzenden kleineren Quaderseitenflächen parallelen Richtung, wodurch ein kompakter, insgesamt quaderförmiger Aufbau erreicht ist, an dem keine vorstehenden Teile vorhanden sind.

Weitere Merkmale, Einzelheiten und Vorteile der Erfindung ergeben sich aus der folgenden Beschreibung und der Zeichnung, auf die bezüglich einer erfindungswesentlichen Offenbarung aller im Text nicht erwähnten Einzelheiten ausdrücklich hingewiesen wird. Hierin zeigen:
- Fig. 1: eine seitliche Aufsicht auf eine Baueinheit einer Kraftmeßvorrichtung mit Überlastschutz, und
- Fig. 2: eine Aufsicht auf eine gegenüber der Ausführungsform von Fig. 1 vereinfachte Ausführungsform.

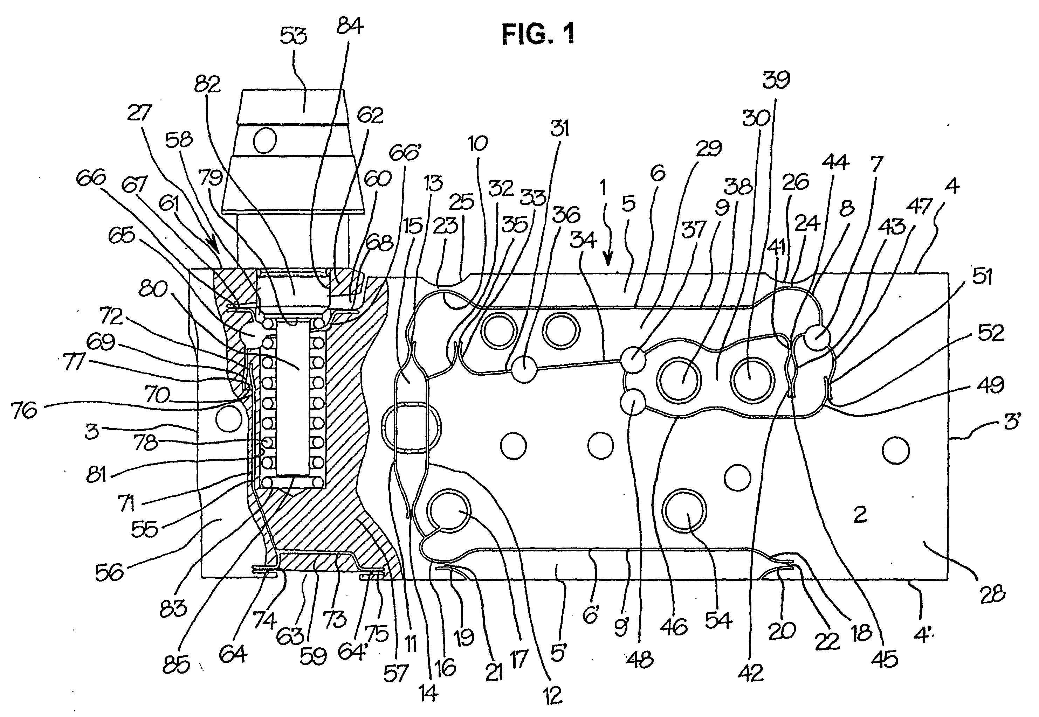

Fig. 1 zeigt eine Aufsicht auf einen im wesentlichen quaderförmigen Materialblock 1 in Richtung auf seine größte Quaderseitenfläche 2, wobei in dem Materialblock ein Lastaufnehmer mit Überlastschutz und weitere Teile einer Kraftmeßvorrichtung ausgebildet sind. Speziell handelt es sich bei dieser Kraftmeßvorrichtung um eine Waage, mit der die Gewichtskraft einer zu wägenden Last gemessen wird.

Der einstückige Materialblock 1 ist in mehrere Materialbereiche unterteilt, die innerhalb des Materialblocks 1 von materialfreien Bereichen voneinander abgegrenzt sind. Diese materialfreien Bereiche durchsetzen den Materialblock 1 senkrecht zur Zeichnungsebene von der in der Zeichnungsebene liegenden größten Quaderseitenfläche 2 bis zu der ihr in einem Abstand hinter der Zeichnungsebene gegenüberliegenden anderen größten Quaderseitenfläche. Zwischen den beiden größten Quaderseitenflächen erstrecken sich senkrecht zur Zeichnungsebene die beiden Paare kleinerer Quaderseitenflächen 3, 3' bzw. 4, 4' und bilden den äußeren Rand des Materialblocks 1. Die materialfreien Bereiche sind zum größten Teil von dünnen Schnittlinien gebildet, deren Stärke in der Richtung der größten Quaderseitenfläche 2 gemessen beispielsweise nur wenige Zehntel Millimeter bis einige Millimeter beträgt. Sie sind beispielsweise durch das Verfahren der Funkenerosion mittels eines Erosionsdrahtes hergestellt.

Die beiden mit den Bezugszeichen 5, 5' bezeichneten Materialbereiche erstrecken sich jeweils längs den beiden zueinander parallelen kleineren Quaderseitenflächen 4, 4', deren in der Zeichnungsebene gemessene Länge größer ist als die Länge der beiden dazu senkrechten anderen kleineren Quaderseitenflächen 3, 3'. An ihren den kleineren Quaderseitenflächen 4, 4' abgewandten Innenseiten sind die Materialbereiche 5, 5' von den materialfreien Bereichen 6, 6' begrenzt, die sich bis auf ihre Endabschnitte parallel zu den kleineren Quaderseitenflächen 4, 4' erstrecken.

Im einzelnen erstreckt sich der materialfreie Bereich 6 von einer zur Einführung des Funkenerosionsdrahtes dienenden Bohrung 7 unter Bildung eines zur nahe gegenüberliegenden kleineren Quaderseitenfläche 4 hin konvex gekrümmten Endabschnittes 8, an den sich der zur kleineren Quaderseitenfläche 4 parallele Hauptabschnitt 9 anschließt. Letzterer setzt sich in einem zur kleineren Quaderseitenfläche 4 hin konvex gekrümmten Endabschnitt 10 fort, der schließlich in einen zu der zur kleineren Quaderseitenfläche 4 senkrechten kleineren Quaderseitenfläche 3 im wesentlichen parallelen Abschnitt 11 übergeht.

Parallel zu dem mit dem materialfreien Bereich 6 zusammenhängenden, zur kleineren Quaderseitenfläche 3 parallelen Abschnitt 11 erstreckt sich ein mit dem materialfreien Bereich 6' zusammenhängender Abschnitt 12. An ihren Enden sind die zueinander und zur kleineren Quaderseitenfläche 3 parallelen Abschnitte 11, 12 konvex gegeneinander gekrümmt, wodurch sie dort zwei biegsame Dünnstellen 13, 14 begrenzen, mit denen der zwischen den beiden parallelen Abschnitten 11, 12 begrenzte Materialbereich 15 zusammenhängt.

Während der Abschnitt 11 jenseits der Dünnstelle 14 endet und jenseits der Dünnstelle 13 mit dem gekrümmten Endabschnitt 10 des materialfreien Bereichs 6 zusammenhängt, endet der Abschnitt 12 jenseits der Dünnstelle 13 und mündet jenseits der Dünnstelle 14 in einen gekrümmten Endabschnitt 16 des materialfreien Bereichs 6'. Dieser gekrümmte Endabschnitt 16 nähert sich ausgehend von einer der Bohrung 7 diagonal gegenüberliegenden Bohrung 17 der Quaderseitenfläche 4' konvex gekrümmt an und geht danach in den zur kleineren Quaderseitenfläche 4' parallelen Hauptabschnitt 9' des materialfreien Bereichs 6' über, der in seinem dem Endabschnitt 16 entgegengesetzten Endabschnitt 18 erneut zur kleineren Quaderseitenfläche 4' hin konvex gekrümmt ist. Den konvex gekrümmten Endabschnitten 16, 18 des materialfreien Bereichs 6' liegen in bezug auf die sich parallel zum Hauptabschnitt 9' erstreckende Längsachse des Materialbereichs 5' zur konvexen Krümmung der Endabschnitte 16, 18 spiegelbildlich gekrümmte materialfreie Bereiche 19, 20 gegenüber, die durch von der kleineren Quaderseitenfläche 4' ausgehende dünne Schnittlinien gebildet sind und zwischen sich und den Endabschnitten 16 bzw. 18 an den beiden Enden des Materialbereichs 5' je eine biegsame Dünnstelle 21, 22 begrenzen. In ähnlicher Weise sind an den Enden des Materialbereichs 5 biegsame Dünnstellen 23, 24 ausgebildet, die einerseits von den konvex gekrümmten Endabschnitten 8, 10 des materialfreien Bereichs 6 und andererseits von Ausnehmungen 25, 26 begrenzt sind, die in dem Materialblock 1 von der kleineren Quaderseitenfläche 4 ausgehend ausgebildet und in bezug auf die Längsmittelachse des Materialbereichs 5 annähernd spiegelbildlich zu den Endabschnitten 8, 10 des materialfreien Bereichs 6 gekrümmt sind.

Die Materialbereiche 5, 5' bilden die Parallelogrammlenker einer Parallelogrammführung, in der der dem Materialbereich 15 benachbarte und an den beiden Dünnstellen 21, 23 mit den Parallelogrammlenkern 5, 5' zusammenhängende Materialbereich 27 des Materialblocks 1 bezüglich dem an den dazu entgegengesetzten Dünnstellen 22, 24 mit den Parallelogrammlenkern 5, 5' zusammenhängenden Materialbereich 28 auslenkbar geführt ist. Dabei bilden die Dünnstellen 21, 22, 23, 24 die Parallelogrammeckpunkte, an denen die in ihrer Längsrichtung steifen Parallelogrammlenker 5, 5' quer zu ihrer Längsrichtung biegsam sind. Der Materialbereich 28 dient zur stationären Festlegung, beispielsweise an einer stationären Grundplatte der Waage, und stellt somit einen feststehenden Teil dar. Der demgegenüber infolge der Biegung der Lenker parallel auslenkbare Materialbereich 27 dient dagegen als Lastaufnehmer der Waage. In ihn wird auf noch zu beschreibende Weise die zu messende Kraft, im Falle einer Waage die Gewichtskraft der zu wiegenden Last, eingeleitet.

An dem zwischen die beiden Parallelogrammlenker 5, 5' ragenden Bereich des als feststehender Teil dienenden Materialbereichs 28 ist ein Hebelwerk aus zwei hintereinandergeschalteten Hebeln abgestützt, die von durch material freie Bereiche voneinander abgegrenzten Materialbereichen 29, 30 des Materialblocks 1 gebildet sind. An seiner zu dem Parallelogrammlenker 5 weisenden Seite ist der Materialbereich 29 von dem auch den Parallelogrammlenker 5 begrenzenden materialfreien Bereich 6 begrenzt. Der den Materialbereich 29 auf seiner dem Parallelogrammlenker 5 abgewandten Seite begrenzende materialfreie Bereich 31 besteht ebenfalls im wesentlichen aus Abschnitten einer dünnen Schnittlinie. Ein erster Abschnitt 32 erstreckt sich ausgehend von der Stelle, an der der den Materialbereich 15 an seiner zu dem Materialbereich 28 weisenden Seite begrenzende Abschnitt 12 in seinen die Dünnstelle 13 begrenzenden, konvex gekrümmten Abschnitt übergeht, ungefähr spiegelsymmetrisch zu diesem gekrümmten Abschnitt. Diesem ersten Abschnitt 32 steht ein dazu spiegelsymmetrisch gekrümmter Endbereich 33 eines sich im übrigen im wesentlichen in der Längsrichtung der Parallelogrammlenker 5, 5' erstreckenden Abschnittes 34 derart gegenüber, daß zwischen dem ersten Abschnitt 32 und dem Endbereich 33 eine biegsame Dünnstelle 35 begrenzt ist, die in der Längsrichtung der Parallelogrammlenker 5, 5' gesehen mit der Dünnstelle 13 fluchtet.

Im einzelnen verläuft der Abschnitt 34 im Anschluß an seinen Endbereich 33 geradlinig und geringfügig zum Hauptabschnitt 9 des materialfreien Bereichs 6 hin konvergierend durch eine Bohrung 36 hindurch bis zu einer Bohrung 37, deren beide zur Einführung des Funkenerosionsdrahtes benutzt werden können. Von der Bohrung 37 aus erstreckt sich der Abschnitt 34 zwei in der Längsrichtung der Parallelogrammlenker 5, 5' miteinander fluchtend angeordneten Bohrungen 38, 39 des Materialbereichs 30 ausweichend bis vor eine in der Nähe der Dünnstellen 22, 24 der Parallelogrammlenker 5, 5' quer zu deren Längsrichtung verlaufende, erste gedachte Gerade, in deren Nähe der Abschnitt 34 eine sich der ersten gedachten Geraden konvex annähernde Krümmung 41 bildet. Im Anschluß an die Krümmung 41 verläuft der Abschnitt 34 ein kurzes Stück in der Richtung der ersten gedachten Geraden und nähert sich daran anschließend erneut der ersten gedachten Geraden mit einem gekrümmten Endbereich 42 konvex an. Dem sich von der Krümmung 41 bis zum Endbereich 42 erstreckenden Verlauf des Abschnitts 34 steht ein dazu in bezug auf die erste gedachte Gerade spiegelbildlich ausgebildeter dünner Schnittlinienabschnitt 43 gegenüber, der zusammen mit dem dazu spiegelbildlichen Bereich des Abschnitts 34 zwei auf der ersten gedachten Geraden liegende biegsame Dünnstellen 44, 45 begrenzt.

Der von den materialfreien Bereichen 6 und 31 abgegrenzte Materialbereich 29 bildet einen Hebel, der an der biegsamen Dünnstelle 35 als Hebelpunkt an dem Materialbereich 28 abgestützt ist. Der an der biegsamen Dünnstelle 13 mit dem zum Lastaufnehmer 27 weisenden Ende des Hebels 29 zusammenhängende Materialbereich 15, der an seiner dazu entgegengesetzten Dünnstelle 14 mit dem Lastaufnehmer 27 zusammenhängt, dient als Koppelglied zwischen dem Lastaufnehmer 27 und dem Hebel 29.

An seinem dem Lastaufnehmer 27 abgewandten Ende hängt der Hebel 29 über die Dünnstelle 44, den sich zwischen den Dünnstellen 44 und 45 erstreckenden Materialbereich und die Dünnstelle 45 mit dem Materialbereich 30 zusammen, der den nachgeschalteten Hebel des Hebelwerks bildet.

Der von dem Materialbereich 30 gebildete nachgeschaltete Hebel ist von dem Hebel 29 durch den sich von der Bohrung 37 bis zu dem Endbereich 42 erstreckenden Verlauf des Abschnittes 34 getrennt. Gegen den Materialbereich 28 ist der den nachgeschalteten Hebel bildende Materialbereich 30 von materialfreien Bereichen 46, 47 abgegrenzt, die ebenfalls im wesentlichen durch dünne Schnittlinien gebildet sind. Im einzelnen erstreckt sich der materialfreie Bereich 46 ausgehend von der Bohrung 37 im wesentlichen quer zur Längsrichtung der Parallelogrammlenker 5, 5' bis zu einer Bohrung 48, von wo aus er im wesentlichen der Längsrichtung der Parallelogrammlenker 5, 5' folgend bis zu einem gekrümmten Endbereich 49 geführt ist, der sich einer sich quer zur Längsrichtung der Parallelogrammlenker 5, 5' erstreckenden zweiten gedachten Geraden konvex annähert. Diese zweite gedachte Gerade verläuft in dem zwischen der durch die Dünnstellen 44, 45 bestimmten, ersten gedachten Geraden und der ihr nächstgelegenen kleineren Quaderseitenfläche 3' begrenzten Bereich des Materialblocks 1. Der materialfreie Bereich 47 erstreckt sich in Form einer dünnen Schnittlinie ausgehend von der Bohrung 7 in Richtung auf den konvex gekrümmten Endbereich 49 des materialfreien Bereichs 46, wo er in einem in bezug auf die zweite gedachte Gerade zum Endbereich 49 spiegelbildlich geformten Endbereich 51 endet. Zwischen den Endbereichen 49, 51 ist eine biegsame Dünnstelle 52 begrenzt, die als abstützender Hebeldrehpunkt für den ausgangsseitigen Hebel 30 an dem Materialbereich 28 dient.

Durch diese Anordnung wird die in den Lastaufnehmer 27 quer zur Längsrichtung der Parallelogrammlenker 5, 5' an einem konischen Aufnahmezapfen 53 für einen Waagschalenträger (nicht dargestellt) eingeleitete, zu messende Kraft mittels des sich parallel zur Richtung der Krafteinleitung erstreckenden Koppelgliedes 15 an den Hebel 29 angekoppelt, der seinerseits durch den sich zwischen den Dünnstellen 44, 45 erstreckenden Materialbereich an den ausgangsseitigen Hebel 30 angekoppelt ist. An letzteren ist beispielsweise mit Hilfe von nicht dargestellten Kraftübertragungsgliedern, die in dessen Bohrungen 38, 39 befestigt sind, ein nicht dargestellter Meßwandler angeschlossen, an den somit die zu messende Kraft nach Übersetzung durch die Hebel 29, 30 übertragen wird. Der ein der zu messenden Kraft entsprechendes Meßsignal liefernde Meßwandler kann beispielsweise auf Halteteilen (nicht dargestellt) abgestützt sein, die mit Hilfe der Bohrung 17 und einer weiteren Bohrung 54 an dem feststehenden Teil 28 festgelegt sind.

Der Lastaufnehmer 27 ist durch einen den Materialblock 1 durchsetzenden materialfreien Bereich 55 in einen ersten Teil 56 und einen zweiten Teil 57 unterteilt, von denen der den zweiten Teil 57 bildende Materialbereich an den Dünnstellen 21, 23 mit den die Parallelogrammlenker bildenden Materialbereichen 5' bzw. 5 und an der Dünnstelle 14 mit dem das Koppelglied 15 bildenden Materialbereich zusammenhängt. Weiter begrenzt der überwiegend in der Form einer dünnen Schnittlinie ausgebildete materialfreie Bereich 55 zwei zueinander parallele Lenker 58, 59, durch die der erste Teil 56 und der zweite Teil 57 parallelogrammartig miteinander verbunden sind. Der Lenker 58 ist an seiner dem Lenker 59 abgewandten Seite von einem dem materialfreien Bereich 55 zugehörigen Teilbereich 60 begrenzt, der sich vom ersten Teil 56 zum zweiten Teil 57 hin keilförmig erweitert und dort zur dem Lenker 58 nächstgelegenen kleineren Quaderseitenfläche 4 weitergeführt ist, wo er aus dem Materialblock 1 frei ausmündet. Hierdurch begrenzt der materialfreie Teilbereich 60 zwischen sich und einem von ihm abgegrenzten Flächenbereich 61 der kleineren Quaderseitenfläche 4 einen über den zweiten Teil 57 auskragenden Lastaufnahmebereich 62, über dem sich der Aufnahmezapfen 53 erhebt. Der Lenker 59 ist an seiner dem Lenker 58 abgewandten Seite von einer flachen Ausnehmung 63 begrenzt, die in dem Materialblock 1 von seiner dem Aufnahmezapfen 53 abgewandten kleineren Quaderseitenfläche 4' her ausgebildet ist und die sich in den beiden Endbereichen des Lenkers 59 mit je einem sich längs dieser kleineren Quaderseitenfläche 4' erstreckenden dünnen Schnittlinienstück 64, 64' fortsetzt.

Angrenzend an die zum Lenker 59 weisende Seite des von dem keilförmigen Teilbereich 60 begrenzten Lenkers 58 ist nahe dem zum ersten Teil 56 weisenden Ende des Lenkers 58 eine die dort einander gegenüberliegenden Bereiche des ersten Teils 56 und des zweiten Teils 57 durchsetzende Bohrung 65 ausgebildet, welche zur Einführung des Funkenerosionsdrahtes dient. Ausgehend von dieser Bohrung 65 ist einerseits ein dünner Schnittlinienabschnitt 66 nahe an das verjüngte Ende des keilförmigen materialfreien Bereichs 60 herangeführt, während sich andererseits ein weiterer dünner Schnittlinienabschnitt 66' zunächst in der Längsrichtung des Lenkers 58 zu dessen an den zweiten Teil 57 angrenzendem Ende hin verläuft und im Bereich dieses Endes ebenfalls nahe an den keilförmigen materialfreien Teilbereich 60 herangeführt ist. Auf diese Weise begrenzen die Schnittlinienabschnitte 66, 66' zwischen sich und der dem Lenker 59 abgewandten Seite des Lenkers 58 in dessen beiden Endbereichen je eine biegsame Dünnstelle 67, 68.

Ein von der Bohrung 65 ausgehender weiterer dünner Schnittlinienabschnitt 69 des materialfreien Bereichs 55 erstreckt sich im wesentlichen in der Richtung der Krafteinleitung bis zu einem kurzen, sich quer zur Richtung der Krafteinleitung erstreckenden Schnittlinienabschnitt 70. Letzterer mündet an seinem dem Schnittlinienabschnitt 69 abgewandten Ende in einen sich im wesentlichen in der Richtung der Krafteinleitung erstreckenden dünnen Schnittlinienabschnitt 71 des materialfreien Bereichs 55. Der dünne Schnittlinienabschnitt 71 weist einerseits einen sich von der Einmündung des Schnittlinienabschnittes 70 aus in Richtung auf den Lenker 58 erstreckenden Zweig auf, welcher in seinem Endbereich zwischen sich und dem Schnittlinienabschnitt 69 eine quer zur Richtung der Krafteinleitung biegeelastische Dünnstelle 72 begrenzt.

Andererseits weist der Schnittlinienabschnitt 71 einen sich zu dem dem Aufnahmezapfen 53 abgewandten Lenker 59 hin erstreckenden Zweig auf, der zunächst ausgehend von der Einmündung des Schnittlinienabschnittes 70 ein Stück parallel zur Richtung der Krafteinleitung und anschließend etwas zum zweiten Teil 57 hin geneigt bis zu einem den Lenker 59 an seiner dem Lenker 58 zugewandten Seite begrenzenden Schnittlinienabschnitt 73 verläuft, in den er im Bereich des zum ersten Teil 56 weisenden Endes des Lenkers 59 einmündet. Der sich in der Längsrichtung des Lenkers 59 erstreckende Schnittlinienabschnitt 73 ist in den Endbereichen des Lenkers 59 nahe an die Schnittlinienstücke 64, 64' der flachen Ausnehmung 63 herangeführt und begrenzt dort zwischen diesen und sich in den beiden Endbereichen des Lenkers 59 je eine biegsame Dünnstelle 74, 75.

Die Schnittlinienabschnitte 66', 73 sind jeweils in einem zu dem ersten Teil 56 weisenden Bereich breiter ausgebildet als die Breite der dünnen Schnittlinien 55 des materialfreien Bereichs 55 in ihrem übrigen Verlauf. Die Verbreiterung der Schnittlinienabschnitte 66', 73 kann sowohl parallel als auch in Richtung der kleineren Quaderseitenfläche 3 keilförmig ausgebildet sein.

Der sich zwischen den Schnittlinienabschnitten 69 und 71 quer zur Richtung der Krafteinleitung erstreckende Schnittlinienabschnitt 70 begrenzt an seiner zum Aufnahmezapfen 53 weisenden Seite eine Schulter 76 des den zweiten Teil bildenden Materialbereichs 57, die zu dem den ersten Teil 56 bildenden Materialbereich hin vorspringt und deren freie Oberfläche in die Richtung der Krafteinleitung weist. Gleichzeitig begrenzt dieser Schnittlinienabschnitt 70 an seiner zum Lenker 59 weisenden Seite eine Schulter 77 des den ersten Teil 56 bildenden Materialbereichs, die zu dem den zweiten Teil 57 bildenden Materialbereich hin vorspringt und deren freie Oberfläche in die der Richtung der Krafteinleitung entgegengesetzte Richtung weist.

Die Schultern 76, 77 dienen als Eingriffsbereiche, indem ihre freien Oberflächen durch ein vorgespanntes elastisches Element in Form einer vorgespannten Druckfeder 78, die in der Zeichnung als Schraubenfeder dargestellt ist, gegeneinandergespannt sind. Das in die der Richtung der Krafteinleitung entgegengesetzte Richtung weisende Ende der Schraubenfeder 78, d. h. deren zum Aufnahmezapfen 53 weisendes Ende, ist an einer in die Richtung der Krafteinleitung weisenden Widerlagerschulter 79 eines Bolzens 80 abgestützt, der in einer den Materialblock 1 im Bereich der Lenker 58, 59 längs der Richtung der Krafteinleitung durchsetzenden Blindbohrung angeordnet ist. Diese Blindbohrung durchsetzt den Lastaufnahmebereich 62 des den ersten Teil bildenden Materialbereichs sowie den dem Lastaufnahmebereich 62 benachbarten Lenker 58 und einen diesem Lenker zugewandten Bereich des den zweiten Teil 57 bildenden Materialbereichs unter Bildung einer in radialer Richtung geschlossenen Ausnehmung 81, deren Durchmesser groß genug ist, die Druckfeder 78 und einen die Widerlagerschulter 79 aufweisenden Bereich am Kopf 82 des Bolzens 80 mit radialem Spiel aufzunehmen. Das in dem zweiten Teil 57 in einem axialen Abstand von dem Lenker 59 gelegene, stirnseitige Ende der Ausnehmung 81 bildet eine in die der Richtung der Krafteinleitung entgegengesetzte Richtung weisende Widerlagerfläche 83 für das in die Richtung der Krafteinleitung weisende Ende der Schraubenfeder 78. In ihrem sich durch den Lenker 58 und den Lastaufnahmebereich 62 hindurch erstreckenden Bereich ist der Durchmesser der Blindbohrung gegenüber dem Durchmesser der Ausnehmung 81 in Anpassung an den Durchmesser des Kopfes des Bolzens 80 stufenförmig erweitert. In dem Lastaufnahmebereich 62 ist die Blindbohrung als Gewindebohrung 84 ausgebildet, in die der dort mit einem Gewinde versehene Kopf 82 des Bolzens 80 eingeschraubt und dadurch mit dem ersten Teil 56 fest verbunden ist.

Dem in die Richtung der Krafteinleitung weisenden Ende 85 des Bolzens 80 steht das die Widerlagerfläche 83 bildende stirnseitige Ende der Ausnehmung 81 in einem kleinen Abstand axial gegenüber. Hierdurch wird die Axialverschiebung des Bolzens 80 und damit eine in der Richtung der Krafteinleitung erfolgende Auslenkung des ersten Teils 56 relativ zu dem zweiten Teil 57 begrenzt.

Der an dem dazu entgegengesetzten Ende angeordnete Kopf 82 des Bolzens 80 ragt aus dem Materialblock 1 heraus und trägt den konischen Aufnahmezapfen 53, auf den die Waagschale der Waage aufgesetzt wird. Auf diese Weise wird die zu messende Kraft über den Bolzen 80 auf den ersten Teil 56 des Lastaufnehmers 27 übertragen. Da der erste Teil 56 von der vorgespannten Druckfeder 78 mit dem zweiten Teil 57 in Eingriff gehalten wird, wird die zu messende Kraft auf den zweiten Teil 57 übertragen. Überschreitet jedoch die eingeleitete Kraft die Vorspannung der Druckfeder 78, so wird die die Vorspannung überschreitende Kraft nicht auf den zweiten Teil 57 weitergeleitet. Statt dessen bewegt sich der erste Teil 56 relativ zu dem zweiten Teil 57, bis die Waagschale an einem festen Anschlag des Waagengehäuses (nicht dargestellt) zum Stillstand kommt.

Da der die Schulter 76 aufweisende Materialbereich in dem das zweite Teil 57 bildenden Materialbereich durch den zu der Dünnstelle 72 führenden Zweig des Schnittlinienabschnitts 71 abgegrenzt ist und mit dem zweiten Teil 57 nur an dieser Dünnstelle 72 zusammenhängt, ist der von dieser Schulter 76 gebildete Eingriffsbereich quer zur Richtung der Krafteinleitung auslenkbar. Dadurch kann er eckenlastbedingten Querbewegungen der beiden Teile 56, 57 hysteresefrei folgen.

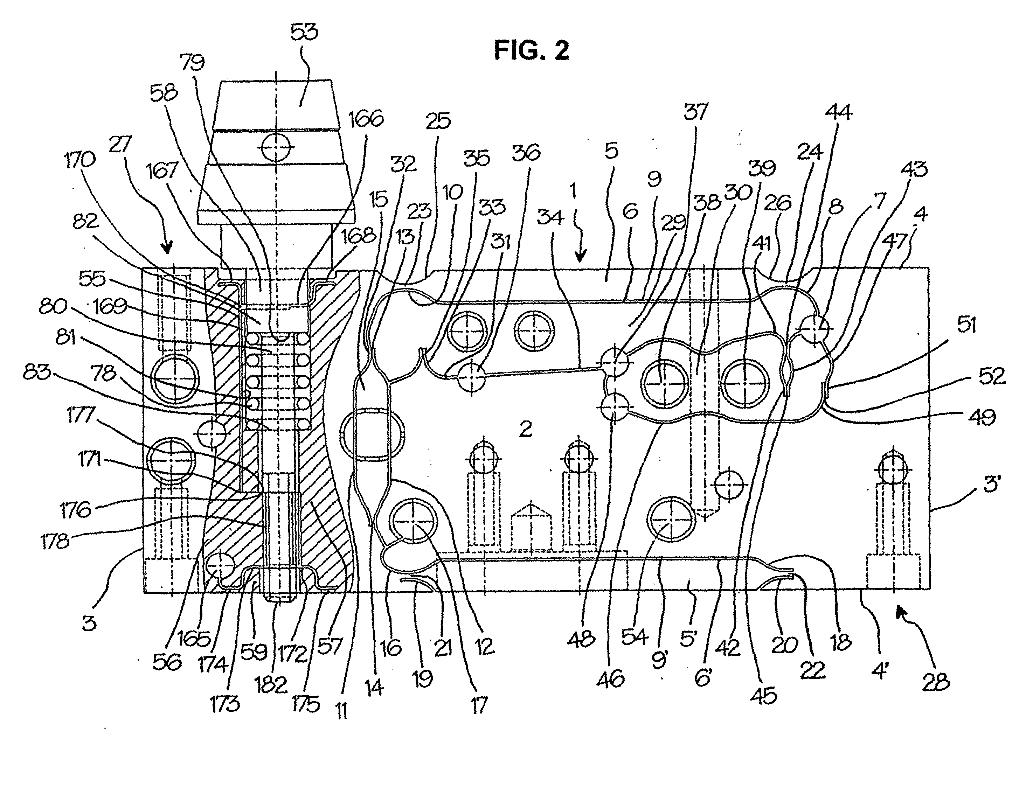

Fig. 2 zeigt eine vereinfachte Ausführungsform, bei der auf die in der Ausführungsform von Fig. 1 vorgesehene querelastische Auslenkbarkeit des Eingriffsbereichs zwischen dem ersten und zweiten Teil des Lastaufnehmers verzichtet ist. Im übrigen besteht weitgehende Übereinstimmung mit der Ausführungsform von Fig. 1, wobei in Fig. 2 die mit Fig. 1 übereinstimmenden Teile mit denselben Bezugszeichen bezeichnet und nicht noch einmal beschrieben sind. Insoweit wird auf die Beschreibung von Fig. 1 verwiesen.

Abweichend von Fig. 1 ist in Fig. 2 die zur Einführung des Funkenerosionsdrahtes dienende Bohrung 165 in der Nähe des dem Aufnahmezapfen 53 abgewandten Lenkers 59 angeordnet. Ausgehend von dieser Bohrung 165 ist ein Schnittlinienabschnitt 173 des materialfreien Bereichs 55 nahe an den von der kleineren Quaderseitenfläche 4' gebildeten Außenrand des Materialblocks 1 herangeführt und daran ein kurzes Stück in Richtung auf das zweite Teil 57 entlanggeführt, wodurch der Schnittlinienabschnitt 173 mit dem von der kleineren Quaderseitenfläche 4' gebildeten Außenrand eine biegsame Dünnstelle 174 am Ende des Lenkers 59 begrenzt. Anschließend verläuft der Schnittlinienabschnitt 173 ein Stück von der kleineren Quaderseitenfläche 4' weg, wonach er erneut der Längsrichtung des Lenkers 59 folgt, den er zwischen sich und der kleineren Quaderseitenfläche 4' begrenzt. In seinem der Bohrung 165 entgegengesetzten Endbereich wendet sich der Schnittlinienabschnitt 173 erneut zu der kleineren Quaderseitenfläche 4' hin und folgt letzterer unter Bildung einer der Dünnstelle 174 entsprechenden Dünnstelle 175 am anderen Ende des Lenkers 59. Ein zu dem Schnittlinienabschnitt 173 in bezug auf eine zu den kleineren Quaderseitenflächen 4, 4' mittig und parallel verlaufende Ebene spiegelsymmetrischer Schnittlinienabschnitt 166 des materialfreien Bereichs 55 begrenzt zwischen sich und der den Aufnahmezapfen 53 tragenden kleineren Quaderseitenfläche 4 den oberen Lenker 58 mit den Dünnstellen 167, 168, entsprechend den Dünnstellen 174, 175.

Ferner weist der materialfreie Bereich 55 einen die beiden Schnittlinienabschnitte 166, 173 verbindenden Schnittlinienabschnitt 169 auf. Dieser erstreckt sich ausgehend von der Stelle 170, an der der den Lenker 58 begrenzende Schnittlinienabschnitt 166 von seinem der Längsrichtung des Lenkers 58 folgenden Verlauf zu der an den ersten Teil 56 angrenzenden Dünnstelle 167 hin umbiegt, ein Stück weit in der Richtung der Krafteinleitung, biegt jedoch vor Annäherung an den den Lenker 59 begrenzenden Schnittlinienabschnitt 173 quer zur Richtung der Krafteinleitung ab und folgt diesem Verlauf über eine Strecke 171, deren Länge etwa der in der Längsrichtung der Lenker 58, 59 zwischen ihren Biegestellen 167, 168 bzw. 174, 175 entspricht. Im Anschluß an die Strecke 171 verläuft der Schnittlinienabschnitt 169 erneut in der Richtung der Krafteinleitung und mündet schließlich in den Schnittlinienabschnitt 173 an der Stelle 172 ein, an der letzterer von seinem der Längsrichtung des Lenkers 59 folgenden Verlauf zu der an den zweiten Teil 57 anschließenden Biegestelle 175 hin abbiegt. Auf diese Weise begrenzt die Strecke 171 auf ihrer zum Lenker 58 weisenden Seite die als Eingriffsbereich dienende Schulter 176 des zweiten Teils 57 und auf ihrer zum Lenker 59 weisenden Seite die als Eingriffsbereich dienende Schulter 177 des ersten Teils 56.

Statt der in der Ausführungsform von Fig. 1 vorgesehenen Blindbohrung ist bei der Ausführungsform von Fig. 2 eine den Materialblock 1 insgesamt durchsetzende Stufenbohrung vorgesehen, die sich durch den Lenker 58 und den ihm zugewandten Bereich des den zweiten Teil 57 bildenden Materialbereichs unter Bildung der die Druckfeder 78 aufnehmenden Ausnehmung 81 hindurch erstreckt. An dem zum Lenker 59 weisenden axialen Ende der Ausnehmung 81 ist der Durchmesser der Stufenbohrung unter Bildung der zur Abstützung der Druckfeder 78 dienenden Widerlagerfläche 83 so weit verringert, daß der Bolzen 80 noch mit radialem Spiel hindurchtreten kann. Daran anschließend verläuft die Stufenbohrung in dem den ersten Teil 56 bildenden Materialbereich zwischen dessen Schulter 177 und dem den ersten Teil 56 gegen den Lenker 59 begrenzenden Schnittlinienabschnitt 173. Sie ist dort als Gewindebohrung 178 ausgebildet, in die der dort mit einem Gewinde versehene Bolzen 80 eingeschraubt und dadurch mit dem ersten Teil 56 fest verbunden ist.

Die Stufenbohrung setzt sich durch den von dem Schnittlinienabschnitt 173 begrenzten Lenker 59 hindurch fort. Dort ist der in die Richtung der Krafteinleitung weisende Endbereich 182 des Bolzens 80 mit Spiel durch den Lenker 59 hindurchgeführt und ragt aus dem Materialblock 1 heraus. Diesem Endbereich 182 steht ein stationärer Anschlag (nicht dargestellt) der Waage in einem kleinen Abstand axial gegenüber. Hierdurch wird die in der Richtung der Krafteinleitung erfolgende Auslenkung des Lastaufnehmers 27 begrenzt.

In den Zeichnungsfiguren sind weitere, bisher nicht beschriebene Bohrungen erkennbar, die teilweise parallel zur Zeichnungsebene und teilweise quer dazu ausgeführt sind. Einige dieser Bohrungen dienen lediglich zum Aufspannen des Materialblocks 1 beim Funkenerosionsvorgang, andere können zum Befestigen des feststehenden Teils 28 an einer stationären Grundplatte der Waage und wieder andere zum Befestigen von weiteren Teilen der Kraftmeßvorrichtung dienen. Auf eine.ins einzelne gehende Beschreibung dieser Bohrungen wurde verzichtet, weil sie für das Verständnis der Erfindung nicht erforderlich ist.

### Verzeichnis der Bezugszeichen

- 1: Materialblock
- 2: größte Quaderseitenfläche
- 3, 3': kleinere Quaderseitenflächen
- 4, 4': kleinere Quaderseitenflächen
- 5, 5': Materialbereiche, Parallelogrammlenker
- 6, 6': materialfreie Bereiche
- 7: Bohrung
- 8: Endabschnitt
- 9, 9': Hauptabschnitt
- 10: Endabschnitt
- 11: paralleler Abschnitt
- 12: Abschnitt
- 13, 14: Dünnstellen
- 15: Materialbereich, Koppelglied
- 16: Endabschnitt
- 17: Bohrung
- 18: Endabschnitt
- 19, 20: materialfreie Bereiche
- 21, 22: Dünnstelle
- 23, 24: Dünnstelle
- 25, 26: Ausnehmungen
- 27: Materialbereich, Lastaufnehmer
- 28: Materialbereich, feststehender Teil der Kraftmeßvorrichtung
- 29: Materialbereich, Hebel
- 30: Materialbereich, Hebel
- 31: materialfreier Bereich
- 32: erster Abschnitt
- 33: Endbereich
- 34: Abschnitt
- 35: Dünnstelle
- 36, 37: Bohrungen
- 38, 39: Bohrungen
- 41: Krümmung
- 42: Endbereich
- 43: Schnittlinienabschnitt
- 44, 45: biegsame Dünnstellen
- 46, 47: materialfreie Bereiche
- 48: Bohrung
- 49: Endbereich
- 51: Endbereich
- 52: Dünnstelle
- 53: Aufnahmezapfen
- 54: Bohrung
- 55: materialfreier Bereich
- 56: Materialbereich, erster Teil
- 57: Materialbereich, zweiter Teil
- 58, 59: Lenker
- 60: Teilbereich
- 61: Flächenbereich
- 62: Lastaufnahmebereich
- 63: Ausnehmung
- 64, 64': Schnittlinienstück
- 65: Bohrung
- 66, 66': Schnittlinienabschnitte
- 67, 68: Dünnstellen
- 69: Schnittlinienabschnitt
- 70: Schnittlinienabschnitt
- 71: Schnittlinienabschnitt
- 72: Dünnstelle
- 73: Schnittlinienabschnitt
- 74: Dünnstelle
- 75: Dünnstelle
- 76: Schulter
- 77: Schulter
- 78: Druckfeder
- 79: Widerlagerschulter
- 80: Bolzen
- 81: Ausnehmung
- 82: Kopf
- 83: Widerlagerfläche
- 84: Gewindebohrung
- 85: Ende
- 165: Bohrung
- 166: Schnittlinienabschnitt
- 167: Dünnstelle
- 168: Dünnstelle
- 169: Schnittlinienabschnitt
- 170: Stelle
- 171: Strecke
- 172: Stelle
- 173: Schnittlinienabschnitt
- 174: Dünnstelle
- 175: Dünnstelle
- 176: Schulter
- 177: Schulter
- 178: Gewindebohrung
- 182: Endbereich

## Patentansprüche

1. Überlastschutz für eine Kraftmeßvorrichtung, insbesondere eine Waage, mit einem Lastaufnehmer (27), der einen zur Einleitung der zu messenden Kraft in die Kraftmeßvorrichtung dienenden ersten Teil (56), einen damit durch zwei parallele, sich mit ihrer Längsrichtung quer zur Richtung der Krafteinleitung erstreckende, längssteife sowie quer zu ihrer Längsrichtung auslenkbare Lenker (58, 59) parallelogrammartig verbundenen, zur Weiterleitung der zu messenden Kraft an einen Meßwandler dienenden zweiten Teil (57), je einen an dem ersten und dem zweiten Teil (56, 57) ausgebildeten ersten bzw. zweiten Eingriffsbereich, durch die der erste und der zweite Teil (56, 57) in einen ihre gegenseitige Auslenkung in der Richtung der Krafteinleitung sperrenden Eingriff bringbar sind, und ein die beiden Teile (56, 57) entgegen der in den ersten Teil (56) einleitbaren, zu messenden Kraft in ihren Eingriff spannendes, vorgespanntes elastisches Element (78) aufweist, **dadurch gekennzeichnet, daß** die beiden Teile (56, 57) und die beiden Lenker (58, 59) durch einstückig zusammenhängende Materialbereiche eines Materialblocks (1) gebildet sind, in dem sie von einem den Materialblock (1) durchsetzenden materialfreien Bereich (55) voneinander abgegrenzt sind.

2. Überlastschutz nach Anspruch 1, **dadurch gekennzeichnet, daß** der erste und der zweite Eingriffsbereich jeweils durch eine an dem den ersten und den zweiten Teil (56, 57) bildenden Materialbereich zu dem jeweils anderen Materialbereich hin vorspringende.Schulter (77, 76) gebildet ist, von denen die Schulter (77) des den ersten Teil (56) bildenden Materialbereichs eine in die der Richtung der Krafteinleitung (86) entgegengesetzte Richtung weisende freie Oberfläche und die Schulter (76) des den zweiten Teil (57) bildenden Materialbereichs eine in die Richtung der Krafteinleitung weisende freie Oberfläche aufweist und die den ersten und den zweiten Teil (56, 57) bildenden Materialbereiche von dem vorgespannten elastischen Element (78) mit diesen freien Oberflächen gegeneinandergespannt sind.

3. Überlastschutz nach Anspruch 2, **dadurch gekennzeichnet, daß** an mindestens einem der beiden Teile (56, 57) seine den Eingriffsbereich bildende Schulter (77, 76) relativ zu dem Teil (56, 57) quer zur Richtung der Krafteinleitung auslenkbar ausgebildet ist.

4. Überlastschutz nach Anspruch 3, **dadurch gekennzeichnet, daß** die auslenkbare Schulter (76) an einem durch eine von materialfreien Bereichen (69, 71) begrenzte, quer zur Richtung der Krafteinleitung biegeelastische Dünnstelle (72) mit dem die auslenkbare Schulter (76) aufweisenden Teil (57) zusammenhängenden Materialbereich dieses Teils (57) ausgebildet ist.

5. Überlastschutz nach einem der Ansprüche 1 bis 4, **dadurch gekennzeichnet, daß** das vorgespannte elastische Element eine vorgespannte Druckfeder (78) ist.

6. Überlastschutz nach einem der Ansprüche 2 bis 5, **dadurch gekennzeichnet, daß** die Druckfeder (78) eine Schraubenfeder ist, deren eines Ende an einer in die der Richtung der Krafteinleitung entgegengesetzte Richtung weisenden Widerlagerfläche (83) des den zweiten Teil (57) bildenden Materialbereichs und deren anderes Ende an einer in die Richtung der Krafteinleitung (86) weisenden Widerlagerschulter (79) eines den den zweiten Teil (57) bildenden Materialbereich in der Richtung der Krafteinleitung und die Schraubenfeder (78) axial mit Spiel durchsetzenden Bolzens (80) abgestützt ist, der mit dem ersten Teil (56) fest verbunden und relativ zu dem zweiten Teil (57) entgegen der Vorspannung der Druckfeder (78) axial verschiebbar ist.

7. Überlastschutz nach Anspruch 6, **dadurch gekennzeichnet, daß** die Schraubenfeder (78) in einer in deren radialer Richtung geschlossenen Ausnehmung (81) des den zweiten Teil (57) bildenden Materialbereichs aufgenommen ist.

8. Überlastschutz nach Anspruch 7, **dadurch gekennzeichnet, daß** die Ausnehmung (81) des den zweiten Teil (57) bildenden Materialbereichs einen die Axialverschiebung des Bolzens (80) begrenzenden Anschlag (83) aufweist.

9. Überlastschutz nach Anspruch 7, **dadurch gekennzeichnet, daß** der Bolzen (80) mit seinem in die Richtung der Krafteinleitung weisenden Endbereich (182) aus dem Materialblock (1) herausragt.

10. Überlastschutz nach einem der Ansprüche 6 bis 9, **dadurch gekennzeichnet, daß** der Bolzen (80) an seinem in die der Richtung der Krafteinleitung entgegengesetzte Richtung weisenden Ende (82) einen Aufnahmezapfen (53) für die zu messende Kraft aufweist.

11. Überlastschutz nach einem der Ansprüche 6 bis 10, **dadurch gekennzeichnet, daß** der Bolzen (80) in dem sich zwischen den beiden Lenkern (58, 59) erstreckenden Bereich des Lastaufnehmers (27) angeordnet ist.

12. Überlastschutz nach einem der Ansprüche 1 bis 11, **dadurch gekennzeichnet, daß** der materialfreie Bereich (55) zumindest teilweise nur durch eine den Materialblock (1) durchtrennende dünne Schnittlinie gebildet ist.

13. Überlastschutz nach Anspruch 12, **dadurch gekennzeichnet, daß** die beiden Lenker (58, 59) an ihren einander zugewandten Seiten von Abschnitten (66, 66', 73; 166, 173) der dünnen Schnittlinie (55) begrenzt sind, die jeweils zwischen sich und den ihnen jeweils gegenüberliegenden, einander abgewandten Seiten der Lenker (58, 59) in deren Endbereichen je eine biegsame Dünnstelle (67, 68; 74, 75; 167, 168; 174, 175) begrenzen.

14. Überlastschutz nach Anspruch 2 und 13, **dadurch gekennzeichnet, daß** die dünne Schnittlinie (55) einen sich von dem dem zweiten Teil (57) abgewandten Ende der Schulter (77; 177) des ersten Teils (56) aus zu dem dem ersten Teil (56) zugewandten Endbereich des Abschnittes (66; 166), der den der Schulter (77) des ersten Teils (56) gegenüberliegenden Lenker (58) begrenzt, erstreckenden Abschnitt (69; 169) und einen sich von dem dem zweiten Teil (57) zugewandten Ende der Schulter (77) des ersten Teils (56) aus zu dem dem ersten Teil (56) zugewandten Endbereich des Abschnittes (73; 173), der den der Schulter (76) des zweiten Teils (57) gegenüberliegenden Lenker (59) begrenzt, erstreckenden Abschnitt aufweist.

15. Überlastschutz nach Anspruch 13 oder 14, **dadurch gekennzeichnet, daß** die die Lenker (58, 59) begrenzenden Abschnitte (60, 66, 66', 73; 166, 173) der Schnittlinie (55) zumindest teilweise eine größere Breite aufweisen als der die die Lenker (58, 59) begrenzenden Abschnitte (66, 73) verbindende Abschnitt (69, 71; 169, 171).

16. Überlastschutz nach einem der Ansprüche 1 bis 15, **dadurch gekennzeichnet, daß** der den zweiten Teil (57) bildende Materialbereich durch zwei sich mit ihrer Längsrichtung quer zur Richtung der Krafteinleitung erstreckende, längssteife und quer zur Längsrichtung biegsame Parallelogrammlenker (5, 5'), deren jeder an einem Ende mit dem den zweiten Teil (57) bildenden Materialbereich und an seinem dazu entgegengesetzten anderen Ende mit einem feststehenden Teil (28) der Kraftmeßvorrichtung verbunden ist, an dem feststehenden Teil (28) parallel auslenkbar geführt und mit einer von dem feststehenden Teil (28) abgestützten, zur Übertragung der zu messenden Kraft auf den Meßwandler dienenden Einrichtung (15, 29, 30) gekoppelt ist.

17. Überlastschutz nach Anspruch 16, **dadurch gekennzeichnet, daß** die Parallelogrammlenker (5, 5') und das feststehende Teil (28) als mit dem zweiten Teil (57) einstückig zusammenhängende Materialbereiche des Materialblocks (1), die von einem den Materialblock (1) durchsetzenden materialfreien Bereich (6, 6') voneinander abgegrenzt sind, ausgebildet sind.

18. Überlastschutz nach Anspruch 17, **dadurch gekennzeichnet, daß** die Parallelogrammlenker (5, 5') an ihren Längsenden von materialfreien Bereichen begrenzte Biegestellen (21, 22, 23, 24) aufweisen.

19. Überlastschutz nach Anspruch 18, **dadurch gekennzeichnet, daß** mindestens einer der eine Biegestelle (21, 22) begrenzenden materialfreien Bereiche durch eine in einen sich in der Längsrichtung der Parallelogrammlenker (5, 5') erstreckenden Außenrand (4') des Materialblocks (1) frei ausmündende dünne Schnittlinie (19, 20) gebildet ist, die einen sich ausgehend von ihrer Ausmündung tangential an die Längsrichtung der Parallelogrammlenker anschmiegenden, gekrümmten Verlauf aufweist.

20. Überlastschutz nach einem der Ansprüche 17 bis 19, **dadurch gekennzeichnet, daß** die zur Übertragung der zu messenden Kraft dienende Einrichtung mindestens einen Hebel (29) aufweist, dessen einer Hebelarm durch ein sich mit seiner Längsrichtung in der Richtung der Krafteinleitung erstreckendes, längssteifes und quer zu seiner Längsrichtung biegeelastisches Koppelglied (15) an den den zweiten Teil (57) bildenden Materialbereich angekoppelt ist.

21. Überlastschutz nach Anspruch 20, **dadurch gekennzeichnet, daß** das Koppelglied (15) und der Hebel (29) von durch materialfreie Bereiche (6, 11, 12, 31) abgegrenzten, zusammenhängenden Materialbereichen eines zwischen die beiden Parallelogrammlenker (5, 5') ragenden Bereichs des feststehenden Teils (28) gebildet sind.

22. Überlastschutz nach Anspruch 21, **dadurch gekennzeichnet, daß** die das Koppelglied (15) und den Hebel (29) begrenzenden materialfreien Bereiche (6, 11, 12, 31) zumindest teilweise nur durch den Materialblock (1) durchtrennende dünne Schnittlinien gebildet sind.

23. Überlastschutz nach einem der Ansprüche 1 bis 22, **dadurch gekennzeichnet, daß** der Materialblock (1) im wesentlichen die Form eines Quaders aufweist, dessen größte Quaderseitenflächen (2) sich parallel zur Längsrichtung der Lenker (58, 59) erstrecken.

## Claims

1. Overload protector for a force-measuring device, specifically for a balance, with a load receiver (27), wherein the load receiver comprises a first part (56) serving to introduce into the force-measuring device a force to be measured, and further comprises a second part (57) serving to transfer the force to be measured to a measuring transducer, said second part being connected to the first part in an arrangement resembling a parallelogram with two guide members (58, 59) running parallel to each other substantially at a right angle to the direction of the force introduction, the guide members being rigid in their lengthwise direction and elastically flexible in their transverse direction; wherein the load receiver also comprises a first engagement area formed on the first part and a second engagement area formed on the second part, the two engagement areas serving to bring the first part and the second part into mutual engagement and thereby blocking their displacement relative to each other in the direction of the force introduction; and wherein the load receiver further comprises a pre-tensioned elastic element (78) urging the two parts (56, 57) into spring-loaded mutual contact in opposition to the force to be measured which is introduced into the first part (56); **characterized in that** the two parts (56, 57) as well as the two guide members (58, 59) are formed as integrally connected material portions of a monolithic material block (1) in which the two guide members are separated from each other by a material-free space (55) that traverses the material block (1).

2. Overload protector according to claim 1, **characterized in that** each of the first and second engagement areas has the shape of a shoulder (77, 76) in the respective material portion making up the first and second parts (56, 57), and each of the shoulders projects towards the respective opposite material portion, the shoulder (77) of the material portion forming the first part (56) has a free surface facing against the direction of the force introduction (86), the shoulder (76) of the material portion forming the second part (57) has a free surface facing in the direction of the force introduction, and the material portions forming the first and second parts (56, 57) are pressed against each other at the free surfaces by the pre-tensioned elastic element (78).

3. Overload protector according to claim 2, **characterized in that** the shoulder (77, 76) forming the engagement area of at least one of the two parts (56, 57) is designed to allow a displacement of the shoulder (77, 76) relative to the respective part (56, 57) in the direction transverse to the force introduction.

4. Overload protector according to claim 3, **characterized in that** the displaceable shoulder (76) is formed in a material portion that is delimited by material-free spaces (69, 71) and connected to the part (57) comprising the displaceable shoulder (76) by a thin portion (72) designed to bend elastically in the direction transverse to the force introduction.

5. Overload protector according to one of the claims 1 to 4, **characterized in that** the pre-tensioned elastic element is a pre-tensioned compression spring (78).

6. Overload protector according to one of the claims 2 to 5, **characterized in that** the pre-tensioned compression spring (78) is a helix spring, wherein one end of the helix spring is seated against a support surface (83) located on the material portion forming the second part and facing against the direction of the force introduction, the other end of the helix spring pushes against a support shoulder (79) facing in the direction of the force introduction, the support shoulder (79) being located on a bolt (80) passing axially and with lateral play through the material portion forming the second part (57) and the helix spring (78) in the direction of the force introduction, the bolt being firmly anchored in the first part (56) and axially moveable relative to the second part (57) against the pre-tensioning force of the compression spring (78).

7. Overload protector according to claim 6, **characterized in that** the helix spring (78) is arranged in a cavity (81) inside the material portion that forms the second part (57), said cavity enclosing the helix spring in the radial direction.

8. Overload protector according to claim 7, **characterized in that** the cavity (81) in the material portion forming the second part (57) has a stop (83) that limits the axial displacement of the bolt (80).

9. Overload protector according to claim 7, **characterized in that** the end portion (182) of the bolt (80) that points in the direction of the force introduction protrudes out of the surface of the material block (1).

10. Overload protector according to one of the claims 6 to 9, **characterized in that** the end (82) of the bolt that points against the direction of the force introduction has a support peg (53) for receiving the force to be measured.

11. Overload protector according to one of the claims 6 to 10, **characterized in that** the bolt (80) is arranged in a portion of the load receiver (27) that extends between the two guide members (58, 59).

12. Overload protector according to one of the claims 6 to 11, **characterized in that** the material-free space (55) is at least in part formed by only a thin linear cut traversing the material block (1).

13. Overload protector according to claim 12, **characterized in that** the two guide members (58, 59) on the sides that face each other are contoured by sections (66, 66', 73; 166, 173) of the thin linear cut (55) that delimit between themselves and the respective opposite, outward-facing sides of the guide members (58, 59) a thin flexible portion (67, 68; 74, 75; 167, 168; 174, 175) at each end of each guide member.

14. Overload protector according to claims 2 and 13, **characterized in that** the thin linear cut (55) has a section (69; 169) starting at that end of the shoulder (77, 177) of the first part (56) which faces away from the second part (57) and extending to the terminal segment of the section (66; 166) that is nearer to the first part (56) and delimits the first guide member (58) that lies opposite the shoulder (77) of the first part (56), and wherein the thin linear cut further has a section starting at that end of the shoulder (77) of the first part (56) which is nearer to the second part (57) and extending to the terminal segment of a section (73; 173) that is nearer to the first part (56) and delimits the second guide member (59) that lies opposite the shoulder (76) of the second part (57).

15. Overload protector according to claim 13 or 14, **characterized in that** the sections (60, 66, 66', 73; 166, 173) of the thin linear cut (55) that delimit the guide members (58, 59) are at least in part wider than the sections (69, 71; 169, 171) that connect the sections (66, 73) which delimit the guide members (58, 59).

16. Overload protector according to one of the claims 1 to 15, **characterized in that** the material portion forming the second part (57) is guided in parallel motion relative to a stationary part (28) of the force-measuring device by two parallelogram guides (5, 5') which extend lengthwise substantially at a right angle to the direction of the force introduction and which are rigid in their longitudinal direction, elastically flexible in their transverse direction, wherein each of the parallelogram guides (5, 5') is connected at one end to the material portion forming the second part (57) and at the opposite end to the stationary part (28) of the force-measuring device; and wherein further the material portion forming the second part (57) is coupled to a mechanism (15, 29, 30) that is supported by the stationary part (28) and serves to transmit the force to be measured to the transducer.

17. Overload protector according to claim 16, **characterized in that** the parallelogram guides (5, 5') and the stationary part (28) are formed as material portions of the material block (1) that are monolithically connected to the second part (57) and are separated from each other by a material-free space (6, 6') that traverses the material block (1).

18. Overload protector according to claim 17, **characterized in that** the parallelogram guides (5, 5') at their longitudinal terminations comprise flexible portions (21, 22, 23, 24) that are delimited by material-free spaces.

19. Overload protector according to claim 18, **characterized in that** at least one of the material-free spaces delimiting a flexible portion (21, 22) is formed by a thin linear cut (19, 20) which opens to an outside border (4') of the material block (1), said border running parallel to the parallelogram guides (5, 5'), wherein the thin linear cut (19, 20) forms a curve that starts from said open end at the outside border and tangentially approaches the longitudinal direction of the parallelogram guides.

20. Overload protector according to one of the claims 17 to 19, **characterized in that** the force-transmitting mechanism has at least one lever (29), one arm of which is coupled to the material portion forming the second part (57) by way of a coupling member (15) which extends in the direction of the force introduction and which is rigid in the longitudinal direction and elastically flexible in the transverse direction.

21. Overload protector according to claim 20, **characterized in that** the coupling member (15) and the lever (29) are formed as integrally connected material portions bounded by material-free spaces (6, 11, 12, 31) in a material domain of the stationary part (28) that reaches out into the space between the two parallelogram guides (5, 5').

22. Overload protector according to claim 21, **characterized in that** the material-free spaces (6, 11, 12, 31) delimiting the coupling member (15) and the lever (29) are at least in part formed only by thin linear cuts dissecting the material block (1).

23. Overload protector according to any one of the claims 1 through 22, **characterized in that** the material block (1) has substantially the shape of a rectangular block, wherein the largest pair of side surfaces (2) of the block run parallel to the lengthwise direction of the parallelogram guides (58, 59).

## Revendications

1. Protection de surcharge pour un dispositif de mesure de force, en particulier une balance, comprenant un récepteur de charge (27), qui présente une première partie (56) servant à l'application de la force à mesurer dans le dispositif de mesure de force, une seconde partie (57) reliée à la façon d'un parallélogramme à la première par deux bras oscillants (58, 59) s'étendant avec leur direction longitudinale transversalement à la direction de l'application de la force, rigides dans la longueur et pouvant être déviés transversalement à leur direction longitudinale, et servant à la transmission de la force à mesurer à un convertisseur de mesure, une première et une seconde zones d'engagement conçues sur la première et la seconde parties (56, 57), par lesquelles la première et la seconde partie (56, 57) peuvent être amenées dans un engagement bloquant leur déviation réciproque dans la direction de l'application de force, et un élément (78) élastique prétendu et serrant les deux parties (56, 57) dans le sens contraire à la force à mesurer et pouvant être introduite sans la première partie (56) dans leur engagement, **caractérisée en ce que** les deux parties (56, 57) et les deux bras oscillants (58, 59) sont formés par des zones de matériau cohérentes d'une seule pièce d'un bloc de matériau (1), dans lequel elles sont délimitées l'une de l'autre par une zone (55) sans matériau traversant le bloc de matériau (1).

2. Protection de surcharge selon la revendication 1, **caractérisée en ce que** la première et la seconde zones d'engagement sont formées respectivement par un épaulement (77, 76) avançant sur la zone de matériau formant la première et la seconde parties (56, 57) en direction de l'autre zone de matériau respective, dont l'épaulement (77) de la zone de matériau formant la première partie (56) présente une surface libre, dirigée dans la direction opposée à la direction de l'application de force (86), et l'épaulement (76) de la zone de matériau formant la seconde partie (57) présente une surface libre dirigée dans la direction de l'application de la force et les zones de matériau formant la première et seconde parties (56, 57) sont tendues l'une par rapport à l'autre par l'élément (78) élastique prétendu avec ces surfaces libres.

3. Protection de surcharge selon la revendication 2, **caractérisée en ce que** sur au moins l'une des deux parties (56, 57) son épaulement (77, 76) formant la zone d'engagement est conçue de façon à pouvoir dévier par rapport à la partie (56, 57) transversalement à la direction de l'application de force.

4. Protection de surcharge selon la revendication 3, **caractérisée en ce que** l'épaulement (76) pouvant être dévié est réalisé sur une zone de matériau de cette partie, zone qui est rattachée en un endroit mince (72) délimité par des zones (69, 71) sans matériau et élastique en flexion transversalement à la direction de l'application de la force avec la partie (57) présentant l'épaulement (76) pouvant être dévié.

5. Protection de surcharge selon l'une quelconque des revendications 1 à 4, **caractérisée en ce que** l'élément élastique prétendu est un ressort de pression (78) prétendu.

6. Protection de surcharge selon l'une quelconque des revendications 2 à 5, **caractérisée en ce que** le ressort de pression (78) est un ressort cylindrique, dont une extrémité est soutenue sur une surface de butée (83), dirigée dans la direction opposée à la direction de l'application de la force, de la zone de matériau formant la seconde partie (57) et dont l'autre extrémité sur un épaulement de butée (79), dirigé en direction de l'application de la force (86), d'un boulon traversant la zone de matériau formant la seconde partie (57) dans la direction de l'application de force et traversant le ressort cylindrique (78) axialement avec du jeu, lequel boulon (80) est relié de façon fixe à la première partie (56) et peut être déplacé axialement par rapport à la seconde partie (57) dans le sens contraire à la prétension du ressort de pression (78).

7. Protection de surcharge selon la revendication 6, **caractérisée en ce que** le ressort cylindrique (78) est réceptionné dans un évidement (81), fermé dans sa direction radiale, de la zone de matériau formant la seconde partie (57).

8. Protection de surcharge selon la revendication 7, **caractérisée en ce que** l'évidement (81) de la zone de matériau formant la seconde partie (57) présente une butée (83) délimitant le décalage axial du boulon (80).

9. Protection de surcharge selon la revendication 7, **caractérisée en ce que** le boulon (80) dépasse avec sa zone d'extrémité (182), dirigée dans la direction de l'application de la force, du bloc de matériau (1).

10. Protection de surcharge selon l'une quelconque des revendications 6 à 9, **caractérisée en ce que** le boulon (80) présente un pivot de logement (53) pour la force à mesurer sur son extrémité (82) dirigée dans la direction opposée à la direction de l'application de la force.

11. Protection de surcharge selon l'une quelconque des revendications 6 à 10, **caractérisée en ce que** le boulon (80) est disposé dans la zone, s'étendant entre les deux bras oscillants (58, 59), du récepteur de charge (27).

12. Protection de surcharge selon l'une quelconque des revendications 1 à 11, **caractérisée en ce que** la zone (55) sans matériau est formée au moins partiellement seulement par une ligne de coupe mince et séparant le bloc de matériau (1).

13. Protection de surcharge selon la revendication 12, **caractérisée en ce que** les deux bras oscillants (58, 59) sont délimités sur leurs côtés tournés les uns vers les autres par des parties (66, 66', 73 ; 166, 173) de la ligne de coupe (55) mince, qui délimitent à chaque fois un endroit mince souple (67, 68 ; 74, 75 ; 167, 168 ; 174, 175) entre eux et les côtés, qui se font face respectivement et opposés les uns aux autres, des bras oscillants (58, 59) dans leurs zones d'extrémité.

14. Protection de surcharge selon les revendications 2 et 13, **caractérisée en ce que** la ligne de coupe (55) mince présente une partie (69 ; 169) s'étendant de l'extrémité, opposée à la seconde partie (57), de l'épaulement (77 ; 177) de la première partie (56) à la zone d'extrémité, tournée vers la première partie (56), de la partie (66 ; 166), qui délimite le bras oscillant (58) faisant face à l'épaulement (77) de la première partie (56) et une partie s'étendant de l'extrémité, tournée vers la seconde partie (57), de l'épaulement (77) de la première partie (56) à la zone d'extrémité, tournée vers la première partie (56), de la partie (73 ; 173), qui délimite le bras oscillant (59) faisant face à l'épaulement (76) de la seconde partie (57).

15. Protection de surcharge selon la revendication 13 ou 14, **caractérisée en ce que** les parties (60, 66, 66', 73 ; 166, 173), délimitant les bras oscillants (58, 59), de la ligne de coupe (55) présentent au moins partiellement une grandeur plus large que la partie (69, 71 ; 169, 171) reliant les parties (66, 73) délimitant les bras oscillants (58, 59).

16. Protection de surcharge selon l'une quelconque des revendications 1 à 15, **caractérisée en ce que** la zone de matériau formant la seconde partie (57) est guidée de façon à pouvoir dévier parallèlement sur la partie (28) fixe par deux bras oscillants du parallélogramme (5, 5') s'étendant avec leur direction longitudinale transversalement à la direction de l'application de la force, rigides en longueur et souples transversalement à la direction longitudinale, dont chacun est relié sur une extrémité à la zone de matériau formant la seconde partie (57) et sur son autre partie opposée à cette zone à une partie (28) fixe du dispositif de mesure, et est couplée avec un appareil (15, 19, 30) soutenu par la partie (28) fixe et servant à la transmission de la force à mesurer au convertisseur de force.

17. Protection de surcharge selon la revendication 16, **caractérisée en ce que** les bras oscillants du parallélogramme (5, 5') et la partie (28) fixe sont conçus comme des zones de matériau, rattachées à la seconde partie (57) d'un seul tenant, du bloc de matériau (1), qui sont délimitées les unes des autres par une zone (6, 6') sans matériau et traversant le bloc de matériau (1).

18. Protection de surcharge selon la revendication 17, **caractérisée en ce que** les bras oscillants du parallélogramme (5, 5') présentent sur leurs extrémités longitudinales des points de flexion (21, 22, 23, 24) délimités par des zones sans matériau.

19. Protection de surcharge selon la revendication 18, **caractérisée en ce qu'**au moins l'une des zones sans matériau et délimitant un point de flexion (21, 22) est formée par une ligne de coupe (19, 20) débouchant librement dans un bord extérieur (4'), s'étendant dans la direction longitudinale des bras oscillants du parallélogramme (5, 5'), du bloc de matériau (1), laquelle ligne présente un tracé incurvé et s'adaptant à partir de son débouché de façon tangentielle à la direction longitudinale des bras oscillants du parallélogramme.

20. Protection de surcharge selon l'une quelconque des revendications 17 à 19, **caractérisée en ce que** l'appareil servant à la transmission de la force à mesurer présente au moins un levier (29), dont un bras est couplé par un élément de couplage (15) s'étendant avec sa direction longitudinale en direction de l'application de la force, rigide en longueur et élastique en flexion transversalement à sa direction longitudinale à la zone de matériau formant la seconde partie (57).

21. Protection de surcharge selon la revendication 20, **caractérisée en ce que** l'élément de couplage (15) et le levier (29) sont formés par des zones de matériau, délimitées par des zones sans matériau (6, 11, 12, 31) et cohérentes d'une zone, dépassant entre les deux bras oscillants du parallélogramme (5, 5'), de la partie fixe (28).

22. Protection de surcharge selon la revendication 21, **caractérisée en ce que** les zones (6, 11, 12, 31) sans matériau et délimitant l'élément de couplage (15) et le levier (29) sont formées au moins en partie seulement par des lignes de coupe minces traversant le bloc de matériau (1).

23. Protection de surcharge selon l'une quelconque des revendications 1 à 22, **caractérisée en ce que** le bloc de matériau (1) présente sensiblement la forme d'un parallélépipède, dont les faces latérales (2) les plus grandes s'étendent parallèlement à la direction longitudinale des bras oscillants (58, 59).
